(19) **Europäisches Patentamt / European Patent Office / Office européen des brevets**

(11) **EP 4 395 146 A1**

(12) # EUROPEAN PATENT APPLICATION

(43) Date of publication:
**03.07.2024 Bulletin 2024/27**

(21) Application number: **22386100.6**

(22) Date of filing: **28.12.2022**

(51) International Patent Classification (IPC):
$H02M\ 1/12^{(2006.01)}$    $H02M\ 7/483^{(2007.01)}$
$H02M\ 1/00^{(2006.01)}$    $H02M\ 5/297^{(2006.01)}$
$H02M\ 5/458^{(2006.01)}$    $H02M\ 1/32^{(2007.01)}$
$H02M\ 5/12^{(2006.01)}$

(52) Cooperative Patent Classification (CPC):
**H02M 7/4835; H02M 1/0048; H02M 1/12;
H02M 1/325; H02M 5/297; H02M 5/4585;
H02M 5/12**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Hitachi Energy Ltd
8050 Zürich (CH)**

(72) Inventors:
• **Häderli Maag, Christoph
8914 Aeugstertal (CH)**
• **Christe, Alexandre
3007 Bern (CH)**
• **Vasiladiotis, Michail
8038 Zürich (CH)**

(74) Representative: **Vossius & Partner
Patentanwälte Rechtsanwälte mbB
P.O. Box 86 07 67
81634 München (DE)**

(54) **CONTROL OF A POWER SYSTEM COMPRISING A MODULAR MULTILEVEL CONVERTER**

(57) The present disclosure relates to a method for controlling a power system comprising a modular multilevel converter, MMC, having a first terminal electrically coupled to a first AC power source and a second terminal electrically coupled to a second AC power source, the method comprising: obtaining at least one power system parameter; adjusting the MMC, in particular a maximum voltage capability of the MMC, the first AC power source, and/or the second AC power source based on the at least one power system parameter, wherein the MMC comprises a plurality of phase-legs, and wherein each of the plurality of phase-legs comprises a plurality of cells; and controlling the power system based on the adjusted MMC, the first AC power source and/or the second AC power source. The present disclosure also relates to a corresponding device and system.

FIG. 2

EP 4 395 146 A1

**Description**

**Technical Field**

The present disclosure relates to a method, device, and power system for controlling a power system comprising a modular multilevel converter, MMC, having a first terminal electrically coupled to a first AC power source and a second terminal electrically coupled to a second AC power source.

**Background**

In a power system comprising a modular multilevel converter, MMC, having a first terminal electrically coupled to a first AC power source and a second terminal electrically coupled to a second AC power source, typically some of the voltages, e.g., MMC cell voltage setpoint, voltage set by the tap-changer position in case the power source(s) comprises a transformer with a tap-changer, or the like, are fixed or chosen in a straightforward relationship with a measured quantity of the power source(s), e.g., excitation as a function of speed in case the power source comprises an excitable machine. A standard approach controls the resulting converter voltage such that the desired operating point is reached, which may operate properly but may not always provide the best performance, e.g., losses, harmonics, control margin, or the like. However, the system has a higher degree of freedom than is required just to set the systems active and/or reactive power level, which is the primary objective. Depending on the conditions of the power sources, e.g., high grid voltage in case one of the power sources comprises a grid and partial-load operation particularly in case one of the power sources is an excitable machine, the power system may be optimized from an electrical point of view.
Thus, there is a need to improve a method, device, and power system for controlling a power system comprising a modular multilevel converter, MMC, having a first terminal electrically coupled to a first AC power source and a second terminal electrically coupled to a second AC power source.

**Summary**

The present disclosure relates to a method for controlling a power system comprising a modular multilevel converter, MMC, having a first terminal electrically coupled to a first AC power source and a second terminal electrically coupled to a second AC power source, the method comprising: obtaining at least one power system parameter; adjusting the MMC, in particular a maximum voltage capability of the MMC, the first AC power source, and/or the second AC power source based on the at least one power system parameter, wherein the MMC comprises a plurality of phase-legs, and wherein each of the plurality of phase-legs comprises a plurality of cells; and controlling the power system based on the adjusted MMC, the first AC power source and/or the second AC power source.
In an embodiment, the first AC power source and/or the second AC power source comprises or is a transformer, in particular comprising a tap-changer, or an excitation system comprising an excitable machine, in particular a synchronous machine.
In an embodiment, the transformer is electrically coupled to a grid or a load at a third terminal different from the first terminal and/or the second terminal, wherein the excitation system is electrically coupled to the grid or the load via a fourth terminal different from the first terminal, second terminal, and/or the third terminal, and wherein the excitable machine is mechanically coupled to a mechanical device, in particular to a reversible pump or turbine.
In an embodiment, at least one cell in at least one of the plurality of phase-legs malfunctions.
In an embodiment, the adjusting the MMC is or comprises: adjusting a cell voltage setpoint of at least one cell in the at least one of the plurality of phase-legs; allocating a cell voltage ripple of at least one cell in the at least one of the plurality of phase-legs, and/or a control margin; and/or setting a portion of the maximum voltage capability required by the first AC power source and a remaining portion of the maximum voltage capability to the second AC power source based on the cell voltage setpoint and/or the status of the MMC, in particular a number of available cells.
In an embodiment, the cell voltage ripple is fixed once a cell capacitance value in at least one cell in the at least one of the plurality of phase legs is chosen.
In an embodiment, the allocated control margin is constant during at least a time window of an operation of the MMC.
In an embodiment, the method further comprises: determining, in particular by solving an optimization problem, at least one property of the power system, wherein the at least one property of the power system is or comprises a maximally achievable active power throughput of the MMC, power losses of the MMC, harmonics, a ratio of a minimum reactive power to an active power of the MMC, or a reactive power capability of the first AC power source or the second AC power source; and controlling the power system based on the at least one property of the power system.
In an embodiment, the at least one power system parameter is or comprises a water head, maximum expected active power of the MMC, a control input received from an external, in particular a superordinated, controller, a maximum expected reactive power of the first AC power source, or a maximum expected reactive power of the second AC power source.

In an embodiment, the at least one power system parameter is or comprises a number of available cells, in particular an absolute value or a relative value to a total number of nominal cells, a minimum number of cells for providing a power required by the first AC power source or the second AC power source, and a grid voltage. The number of available cells and the number of nominal cells may be per phase leg or MMC.

In an embodiment, the adjusting the first AC power source and/or the second AC power source is or comprises adjusting at least one of a tap-position of the tap-changer, a rotational speed of a rotational component of the excitable machine, a machine voltage of the excitable machine, a reactive power of the excitable machine, or a reactive power of the grid.

In an embodiment, the MMC, in particular a maximum voltage capability of the MMC is adjusted based on the at least one power system parameter and subsequently the first AC power source and/or the second AC power source are adjusted based on the at least one power system parameter.

In an embodiment, the method further comprises: obtaining voltage and/or current measurements of the first AC power source at the first terminal and/or the second AC power source at the second terminal; adjusting the MMC, in particular a maximum voltage capability of the MMC, the first AC power source, and/or the second AC power source based further on the obtained voltage and/or current measurements; and controlling the power system based on the adjusted MMC, the first AC power source and/or the second AC power source.

The present disclosure also relates to a device for controlling a power system comprising a modular multilevel converter, MMC, having a first terminal electrically coupled to a first AC power source and a second terminal electrically coupled to a second AC power source, the device comprising a processor being configured to: obtain at least one power system parameter; adjust the MMC, in particular a maximum voltage capability of the MMC, the first AC power source, and/or the second AC power source based on the at least one power system parameter, wherein the MMC comprises a plurality of phase-legs, and wherein each of the plurality of phase-legs comprises a plurality of cells; and control the power system based on the adjusted MMC, the first AC power source and/or the second AC power source.

In an embodiment, the processor is configured to perform any one of the above-described embodiments.

The present disclosure further relates to a power system comprising the device according to any one of the above-described embodiments and a modular multilevel converter, MMC, having a first terminal electrically coupled to a first AC power source and a second terminal electrically coupled to a second AC power source.

In an embodiment, the power system further comprises an excitation system comprising an excitable machine, in particular a synchronous machine.

Various exemplary embodiments of the present disclosure are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

In the following, exemplary embodiments of the present disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

The above and other aspects and their implementations are described in greater detail in the drawings, the descriptions, and the claims.

**Brief Description of the Drawings**

Fig. 1 illustrates a flowchart of the method according to an embodiment of the present disclosure.

Fig. 2 illustrates a power system controlled based on the method according to an embodiment of the present disclosure.

Fig. 3 illustrates a simplified electrical representation of a power system controlled based on the method according to an embodiment of the present disclosure.

Fig. 4 illustrates a control block with parameters according to an embodiment of the present disclosure.

Fig. 5 a) illustrates a PQ diagram of a power system in a first operation condition according to an embodiment of the present disclosure. Fig. 5 b) illustrates a PQ diagram of a power system in a second operation condition according to an embodiment of the present disclosure. Fig. 5 c) illustrates a PQ diagram of a power system in a third operation condition according to an embodiment of the present disclosure.

Fig. 6 illustrates a performance of a power system operating based on the method according to an embodiment of the present disclosure.

Fig. 7 a) illustrates a device according to an embodiment of the present disclosure. Fig. 7 b) illustrates a power system according to an embodiment of the present disclosure.

**Detailed Description of the Disclosure**

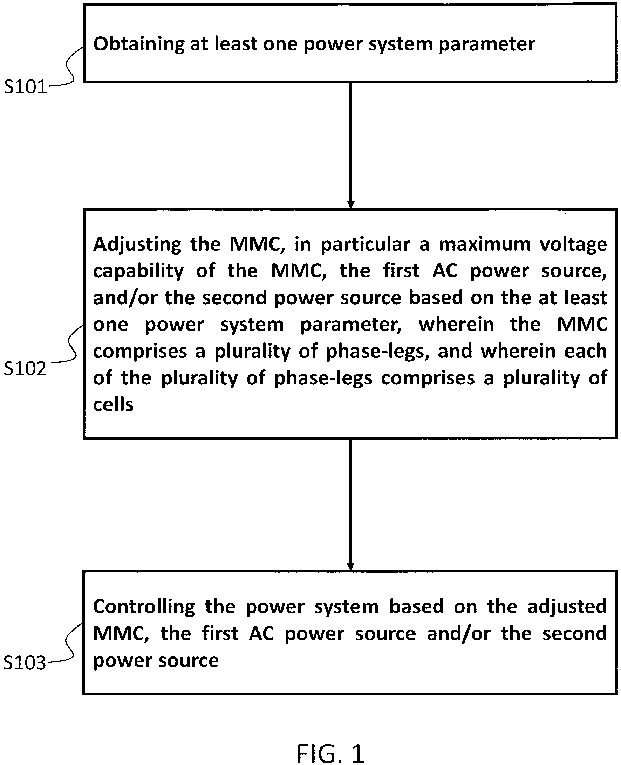

Fig. 1 illustrates a flowchart of the method according to an embodiment of the present disclosure. In particular, the flowchart relates to a method for controlling a power system comprising a modular multilevel converter, MMC, having a first terminal electrically coupled to a first AC power source and a second terminal electrically coupled to a second AC power source. At S101, at least one power system parameter is obtained. At S102, the MMC is adjusted, in particular a maximum voltage capability of the MMC, the first AC power source, and/or the second AC power source based on the at least one power system parameter are adjusted, wherein the MMC comprises a plurality of phase-legs, and wherein each of the plurality of phase-legs comprises a plurality of cells. At S103, the power system is controlled based on the adjusted MMC, the first AC power source and/or the second AC power source.
Herein, the maximum voltage capability of the MMC refers to the internal voltage of a converter that can be utilized, in particular as maximum, to generate AC output voltages. Also, the power system parameter herein refers to any type, e.g., electrical, physical, or the like, of parameter of a power system and any of components therein. In particular, the power system parameter may be at least one of a water head, maximum expected active power of the MMC, a control input received from an external, in particular a superordinated, controller, a maximum expected reactive power of the first AC power source or a maximum expected reactive power of the second AC power source. The water head may be, in particular in pumped storage hydropower system, the hight difference between the upper and lower lake. In an embodiment, the expected maximum active power of the system is computed based on the water head. In an embodiment, the expected maximum active power of the system is proportional to the water head. The power system parameter may be a number of available cells in particular an absolute value or a relative value to a total number of nominal cells, a minimum number of cells for providing a power required by the first AC power source or the second AC power source, and a grid voltage. A nominal cell is a cell which operates properly, i.e., without a malfunction or being lost, in a normal operation condition. An available cell may be a functioning cell during an operation, bearing the opposite meaning to the lost cell. The number of available cells may be a difference between a number of nominal cells and a number of lost cells.

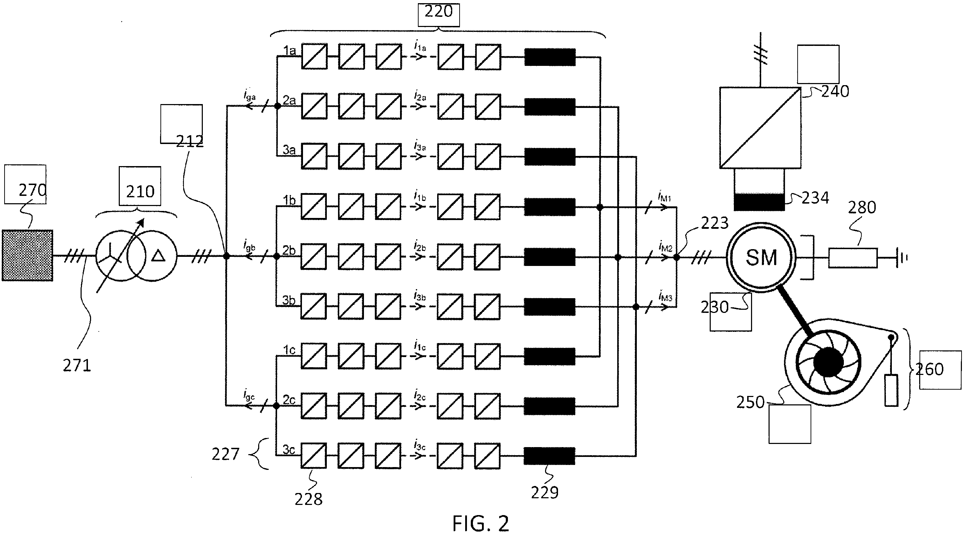

Fig. 2 illustrates a power system controlled based on the method according to an embodiment of the present disclosure. The power system of Fig. 2 is a converter fed synchronous machine (CFSM) pumped-storage hydropower (PSH) plant. The power system may be or comprise a converter connecting two grids, each connected by transformer to the converter. In this case, the voltage adjustment may be done by OLTC on both sides. In the case of a grid intertie (grid to grid interconnection by converter), the number of phase of the used transformer may be 3 or any other number. In particular, there may be a connection of 3 phases to 2 phases (utilizing 6 phase-legs) or from 2 phase to 2 phases (utilizing 4 phase-legs). The power system comprises a transformer 210, in particular with an online tap changer (OLTC), a converter 220, in particular a static frequency converter (SFC) based on a direct modular multilevel converter (MMC), more particularly a direct 3-phases-to-3-phases (3ph/3ph) MMC, a synchronous machine (SM) 230, a DC excitation system 240, a reversible pump or turbine 250, a governor and guide vane 260, a grid 270, and an electrical equivalent of a load 280 represented as an impedance. The converter 220 is electrically coupled to the transformer 210 via the first terminal 212 and the converter 220 is electrically coupled to the SM 230 via the second terminal 223. The converter 220 comprises a plurality of phase-legs and each of the plurality of phase legs comprises a plurality of cells. In Fig. 2, one of the plurality of phase legs is indicated with a reference numeral 227, one of the plurality of cells with 228, and a reactor with 229, for clarity. The first terminal 212 and/or the second terminal 223 may be a point of common coupling (PCC), a terminal terminating and electrically coupling two electrical equipment, or point in an electrical line. Hereinafter, the first terminal 212 is also referred to as a grid-side terminal and the second terminal 223 is also referred to as a machine-side terminal. A direct MMC is a type of MMC directly linking each AC input phase to each AC output phase with MMC phase-legs without forming an intermediate DC link, forming a n by m matrix, wherein n and m denote a number of input phases and a number of output phases, respectively. The converter 220 may be a grid intertie, in particular a 3ph/3ph grid intertie, wherein the grid intertie is a converter for grid interconnections. The converter 220 may be a converter suitable for a rail application. The converter 220 may be an indirect MMC, wherein an indirect MMC utilizes a number of MMC phase-legs to first generate a DC voltage. From this DC voltage, a second set of MMC phase-legs is used to generate the AC output voltage. There are 2 x n phase-legs for the input and 2 x m phase-legs for the output, wherein n and m denote a number of input phases and a number of output phases, respectively . In an embodiment, the SM 230 may be replaced with another transformer, in particular an online tap changer transformer and accordingly the DC excitation system 240, the reversible pump or turbine 250, and the governor and guide vane 260 may be rendered unnecessary.

In the embodiment of Fig. 2, for a given operating point, the pair machine speed - machine torque may be determined, while leaving (almost) free the machine voltage, i.e., the machine voltage may be set by excitation. A changing machine voltage may have an impact on the machine current, in order to maintain the given torque and/or power and not influence the given mechanical operating point. The operating point may be determined by the hill chart of the hydraulic portion, namely the reversible pump or turbine 250, of the power system of Fig .2. When the converter 220 is a direct MMC, virtual dc-link voltage ($V_{\mathrm{DC}}^{\mathrm{virt}}$) is shared between the grid-side terminal 212 and machine-side terminal 223 (plus some reserve for the ripple). The virtual dc-link voltage is ($V_{\mathrm{DC}}^{\mathrm{virt}}$) is defined as the dc average of the sum of the (floating) capacitor voltages in one of the plurality of phase-leg. The virtual dc-link voltage may not be physically measured.

The virtual dc-link voltage $V_{\mathrm{DC}}^{\mathrm{virt}}$ may be determined according to the following equation:

$$V_{\mathrm{DC}}^{\mathrm{virt}}(1 - k_r) - V_{\mathrm{ctrlMarg}} = U_{\mathrm{Max}}^{\mathrm{ARU}} + U_{\mathrm{Max}}^{\mathrm{INU}} = k_{\mathrm{DC}}^{\mathrm{ARU}} U_{\mathrm{b}}^{\mathrm{ARU}} + k_{\mathrm{DC}}^{\mathrm{INU}} U_{\mathrm{b}}^{\mathrm{INU}} \qquad (1)$$

wherein $k_r$ is the ripple provision factor (typically in the range of 0.075 to 0.1), $V_{\mathrm{ctrlMarg}}$ the voltage margin for control, $u_{\mathrm{Max}}^{\mathrm{ARU}}$ the maximum converter voltage towards the grid-side, $u_{\mathrm{Max}}^{\mathrm{INU}}$ the maximum voltage towards the machine-side, $k_{\mathrm{DC}}^{\mathrm{ARU}}$ the coefficient for the grid-side share, $U_{\mathrm{b}}^{\mathrm{ARU}}$ the grid-side base voltage, $k_{\mathrm{DC}}^{\mathrm{INU}}$ the coefficient for the machine-side share, and $U_{\mathrm{b}}^{\mathrm{INU}}$ the machine-side base voltage.

The maximum $V_{\mathrm{DC}}^{\mathrm{virt}}$ may be determined during the system design stage based on PQ diagram (illustrating the reactive power capability of a power generating module with respect to active power at a connection point, e.g., a PCC, a terminal, any electrically coupling point, or the like) and PCC voltage variation requirements. The maximum $V_{\mathrm{DC}}^{\mathrm{virt}}$ may also be determined by the number of nominally operative cells in the converter 220. A nominally operative cell, also referred to as a healthy cell, is a cell which functions properly in a normal operating condition of the power system, in particular without partial or full loss of controllability in the cell voltage and/or current. An antonym of the nominally operative cell may be a lost cell, also referred to as unhealthy cell or malfunctioning cell. A cell is considered lost or malfunctioning when the controllability, in particular the cell voltage and/or current, thereof is affected either partially or fully, which in turn affect the overall conversion capability (i.e., active and reactive power transfer) of the converter. For instance, a cell may be considered lost when short circuited due to a failure, e.g., semiconductor fault in any components of the cell, in particular a switch within a phase-leg of the cell. An operation of a power system during which at least one cell in at least one of the plurality of phase-legs malfunctions or is lost is herein referred to as N-m operation, wherein N denotes a number of nominal cells per phase leg and m is a positive integer number and denotes a number of lost cells per phase leg, respectively. In N-m operation, the virtual dc-link voltage $V_{\mathrm{DC}}^{\mathrm{virt}}$ is reduced to

$V_{\mathrm{DC0}}^{\mathrm{virt}}(1 - m/N)$ in the worst case. It is noted that unlike the maximum $V_{\mathrm{DC}}^{\mathrm{virt}}$ , the values of $k_{\mathrm{DC}}^{\mathrm{ARU}}$ and $k_{\mathrm{DC}}^{\mathrm{INU}}$ may be adjusted during operation of the power system of Fig. 2 through controllable means such as the transformer 210 and the machine excitation system 240.

Similarly, $I_{\mathrm{PhL}}$ is shared between the grid-side terminal 212 and machine-side terminal 223. The peak phase-leg current (related to the turn-off capability of the semiconductor device) may be determined during the system design stage as follows:

$$I_{\mathrm{PhL}}^{\mathrm{peak}} = \frac{I_{\mathrm{ARU}}^{\mathrm{peak}}}{3} + \frac{I_{\mathrm{INU}}^{\mathrm{peak}}}{3} \qquad (2)$$

wherein $I_{\mathrm{ARU}}^{\mathrm{peak}}$ is the peak current on the grid-side and $I_{\mathrm{INU}}^{\mathrm{peak}}$ the peak current on the machine-side. An arithmetic sum of ARU and INU currents applies, as the two sides have undefined phase shift and consequently, peaks may fully add up. The phase-leg current rms value $I_{\mathrm{PhL}}^{\mathrm{rms}}$ may be determined according to the following equation, owing to the spectral separation of the grid- and machine-side frequencies:

$$I_{\mathrm{PhL}}^{\mathrm{rms}} = \sqrt{\left(\frac{I_{\mathrm{ARU}}^{\mathrm{rms}}}{3}\right)^2 + \left(\frac{I_{\mathrm{INU}}^{\mathrm{rms}}}{3}\right)^2} \qquad (3)$$

wherein $I_{\mathrm{ARU}}^{\mathrm{rms}}$ is the rms current on the grid-side and $I_{\mathrm{INU}}^{\mathrm{rms}}$ the rms current on the machine-side. Some provisions for the balancing currents are already included in the said two rms currents.

In an embodiment, the transformer 210 is electrically coupled to a grid or a load at a third terminal 271 different from the first terminal and/or the second terminal, wherein the excitation system 240 is electrically coupled to the grid or the load via a fourth terminal 234 different from the first terminal, second terminal, and/or the third terminal, and wherein the excitable machine is mechanically coupled to a mechanical device, in particular to a reversible pump or turbine.

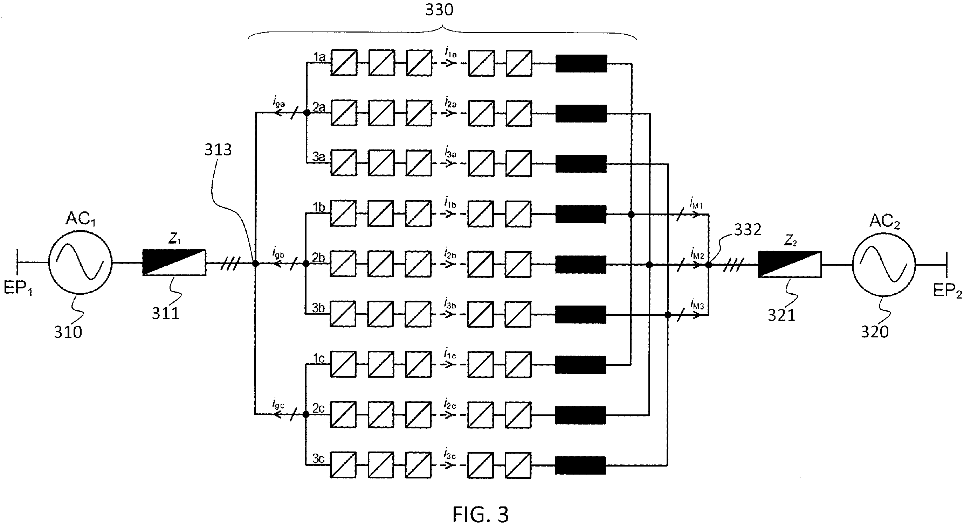

It is noted that ratios between the ARU and INU-side voltage and/or current may be adjusted through two controllable devices: the grid-side transformer 210 with Online Tap-Changer (OLTC) and the machine excitation system 240. While there might be a limit in the number of switchings of the OLTC, the modification of the stator voltage through the excitation system 240 allows for finer tuning but has an upper limit to avoid machine saturation. Fig. 3 illustrates a more generalized power system.

Fig. 3 illustrates a simplified electrical representation of a power system controlled based on the method according to an embodiment of the present disclosure. The power system comprises an MMC having a first terminal 313 electrically coupled to a first AC power source 310 and a second terminal 332 electrically coupled to a second AC power source 320. A first source impedance ($Z_1$) 311 and a second source impedance ($Z_2$) 321 denote source impedances of the first and second AC power sources, respectively. The first terminal 313 and/or the second terminal 332 may be a point of common coupling (PCC), a terminal terminating and electrically coupling two electrical equipment, or point in an electrical line. The power system of Fig. 2 may be represented using the simplified electrical representation of Fig. 3. That is, the grid side (grid 210 and transformer 220 with tap-changer of Fig. 2) and the components on the machine side can both be represented as the first AC power source 310 and the second AC power source 320, respectively, with the respective source impedances ($Z_1$ 311 and $Z_2$ 321). The voltage limitation of the converter applies to the SFC terminal voltages. The power flows across the first and second source impedances ($Z_1$ 311 and $Z_2$ 321) generate a voltage drop which needs to be considered. The said voltage drop may be used to optimize operation, e.g., drawing reactive power from the machine to lower the terminal voltage. In an embodiment, the method according to Fig.1 is applied to the power system of Fig. 3.

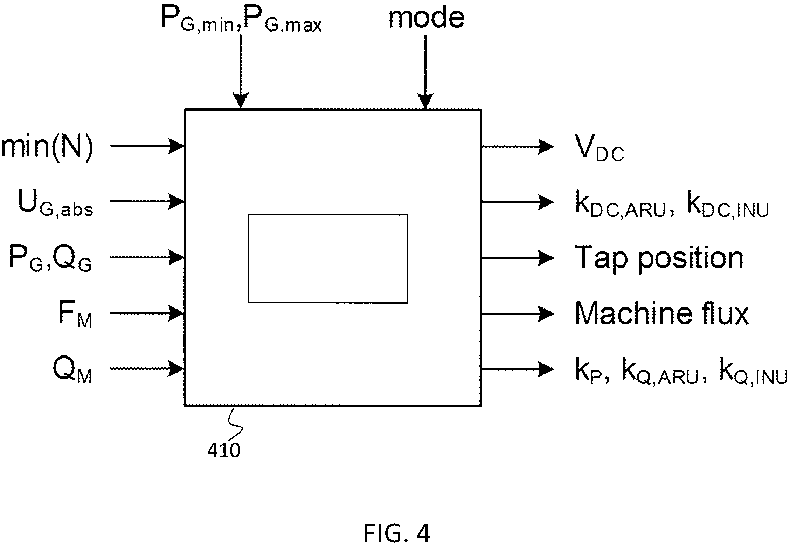

Fig. 4 illustrates a control block with parameters according to an embodiment of the present disclosure. In an embodiment, the control block of Fig. 4 is used to control the power system of Fig. 2 or Fig. 3. The control block 410 determines at least one output based on at least one input. The input of the control block 410 includes, but not limited to, a maximum expected active power, maximum expected grid side reactive power, grid voltage, external control input, e.g., from a superordinated controller, pre-set parameter, e.g., choice of optimization scheme (the parameter 'mode' in Fig. 4) or active/reactive power priority, minimum number of available cells among all phase-legs min(N-$m_k$), with m E {0; 1; 2; ...; $N$} and $k \in$ {1; 2; ...; number of phase - legs}, primary-side grid voltage amplitude $U_{G,abs}$, active power reference of the grid $P_G$ or of the machine $P_M$, grid-side reactive power reference $Q_G$, machine frequency $F_M$, machine-side reactive power reference $Q_G$, and additional physical constraints, e.g., $P_{G,min}$ to remain within (hydraulic) stability limits of the turbine or pump, $P_{G,max}$ to account for the limitation due to the available water head, or the like. The number of available cells may be an absolute number of a number relative to a number of nominal cells. In an embodiment, in particular in pumped storage hydropower system, the input of the control block 410 includes a water head. The input of the control block 410 may be or comprise the power system parameter. In an embodiment, the input of the control block 410 includes hard constraints, e.g., tap-changer out of order, number of switchings of the tap-changer, or the like. The output of the control block 410 includes, but not limited to, machine excitation as a function of speed, machine speed, machine reactive power, grid side reactive power, virtual dc-link voltage $V_{DC}^{virt}$, coefficient for the grid-side share $k_{DC}^{ARU}$, in particular when $V_{DC}^{virt}$ is expressed according to eq.(1), coefficient for the machine-side share $k_{DC}^{INU}$, in particular when $V_{DC}^{virt}$ is expressed according to eq.(1), tap-changer position of a tap-changer in a transformer, machine flux reference, coefficient for the active power reduction $k_p$, coefficient for the reactive power modification on ARU side $K_{Q,ARU}$, and coefficient for the reactive power modification on INU side $k_{Q,INU}$.

In an embodiment, the MMC, in particular a maximum voltage capability of the MMC, the first AC power source, and/or the second AC power source are adjusted based on the at least one power system parameter. In an embodiment, the outputs of the control block 410 of Fig. 4 are determined based on the at least one power system parameter and forms the basis of the said adjustment. In an embodiment, the MMC, in particular the maximum voltage capability of the MMC, is adjusted by adjusting a cell voltage setpoint of at least one cell in the at least one of the plurality of phase-legs; allocating a cell voltage ripple of at least one cell in the at least one of the plurality of phase-legs, and/or a control margin; and/or setting a portion of the maximum voltage capability to the first AC power source and a remaining portion of the maximum voltage capability to the second AC power source based on the cell voltage setpoint and/or the status of the MMC, in particular a number of available cells. In an embodiment wherein the first AC power source and/or the second AC power source comprises or is a transformer, in particular comprising a tap-changer, or an excitation system comprising an excitable machine, in particular a synchronous machine, the first AC power source and/or the second AC power source is adjusted by adjusting at least one of a tap-position of the tap-changer, a rotational speed of a rotational component of the excitable machine, a machine voltage of the excitable machine, a reactive power of the excitable machine, or a reactive power of the grid.

In an embodiment, at least two of the first AC power source, the second AC power source, and the MMC, in particular a maximum voltage capability of the MMC are adjusted based on the at least one power system parameter. In particular, the MMC and at least one of the first AC power source and the second AC power source are adjusted. In an embodiment, the MMC, in particular the maximum voltage of the MMC, is adjusted based on the at least one power system parameter, and subsequently the first AC power source and/or the second AC power source are adjusted based on the at least one power system parameter. The at least one power system parameter used to adjust the MMC may or may not be the same as the at least one power system parameter used to adjust the first AC power source and/or the second AC power source.

It is noted that the AC voltages of the first AC power source and/or the second AC power source are not directly controlled, but rather are affected by the adjustment according to any one of the above-described embodiments and a parameter different from the parameter used for the adjustment. In other words, when the first AC power source and/or the second AC power source are controlled, the AC voltages thereof vary with a parameter different from the parameter used for the adjustment. For instance, when the tap-position of the tap-changer inside the transformer is adjusted, the AC voltage of the grid-side vary with changing grid voltage. Alternatively, or in conjunction therewith, when machine excitation and/or machine voltage is adjusted, the AC voltage of the machine will vary with the chosen operating point.

In an embodiment, at least one of the inputs to the control block of Fig. 4 is determined, in particular by a device or a controller different from the control block used to control the power system, by solving an optimization problem particularly with the optimization target of the maximum active power throughput, highest maximum active power possible, reactive power capability on the first source side and/or the second source side, reduced losses, reduced harmonics, grid code compatibility, i.e., minimum reactive power to active power ratio. In particular, the priorities of target values of inputs of the control block of Fig. 4, in particular $Q_M$, $Q_G$, $P_G$ and/or $P_M$, are determined by solving an optimization problem and at least one of the inputs of the control block of Fig. 4 is maintained at a quasi-static state or value, i.e., the input value is not changing during the time of the optimization. In an embodiment, at least one property of the power system is determined, in particular by solving an optimization problem, wherein the at least one property of the power system is or comprises a maximally achievable active power throughput of the MMC, power losses of the MMC, harmonics, a ratio of a minimum reactive power to an active power of the MMC, or a reactive power capability of the first AC power source or the second AC power source. Accordingly, the power system may be controlled based on the at least one property of the power system. The harmonics is frequency harmonics that is a positive integer multiple of fundamental frequency of the grid frequency or machine frequency and may be current harmonics and/or voltage harmonics of the current and/or voltage at the converter terminals. The at least one property of the power system may be determined by a device or a controller different from the control block used to control. The input of the control block 410 of Fig. 4 may be or comprise the at least one property of the power system. In an embodiment, the input of the control block 410 includes 'mode' for optimization criteria selection.

In an embodiment, the method further comprises: obtaining voltage and/or current measurements of the first AC power source at the first terminal and/or the second AC power source at the second terminal; adjusting the MMC, in particular a maximum voltage capability of the MMC, the first AC power source, and/or the second AC power source based further on the obtained voltage and/or current measurements; and controlling the power system based on the adjusted MMC, the first AC power source and/or the second AC power source. In particular, the said voltage and/or current measurements are obtained after the first adjustment of the MMC, the first AC power source, and/or the second AC power source based on the at least one power system parameter and the said adjustment based thereon fine tunes the said first adjustment.

It is noted that the method according to any one of the embodiments described herein may advantageously, but not limited to, extend the operating range of $P_G$ or $P_M$ particularly in N-m operation and/or $Q_G$ particularly in normal operation at partial load, performance optimization particularly to reduce losses, e.g., system losses, machine losses, converter losses, or the like, and/or harmonics, and/or improve the operational robustness such as control margins, cell capacitor voltage ripple, or the like.

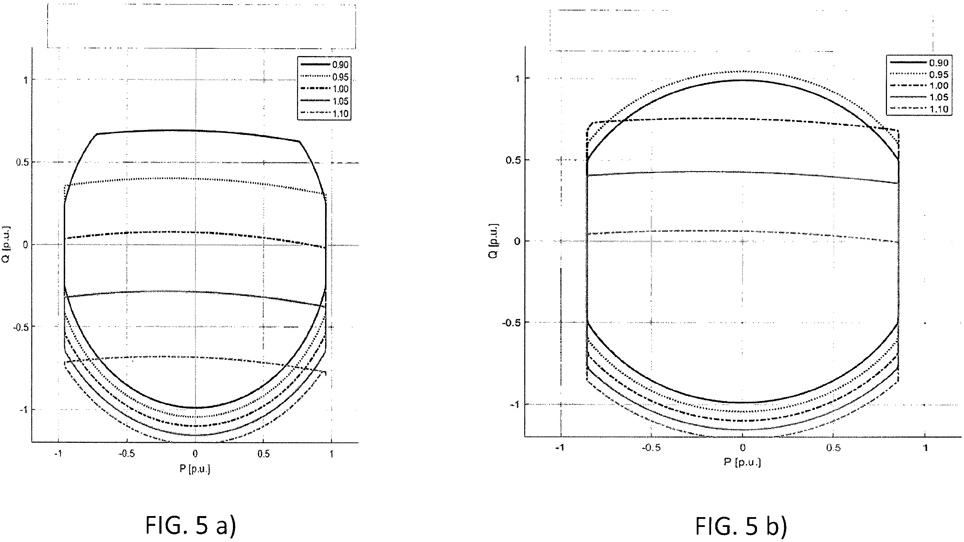

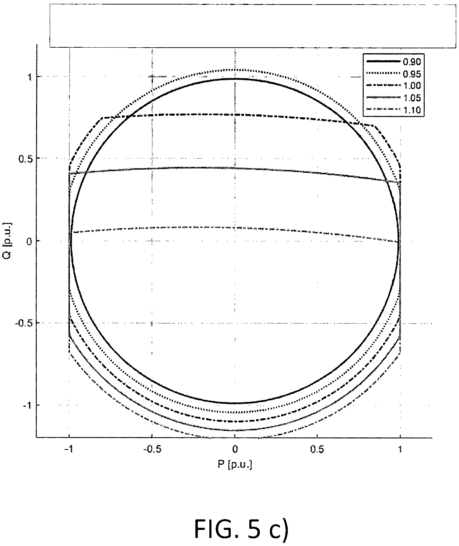

Fig. 5 a) - c) illustrate PQ diagrams of a power system, in particular of Fig. 3 or Fig. 4, controlled based on the method according to any one of the embodiments described herein, in various operation conditions according to an embodiment of the present disclosure. In particular, Fig. 5 a) illustrates a PQ diagram for N-m operation with active power priority but significantly reduced reactive power capability, Fig. 5 b) illustrates a PQ diagram for adjusted tap-changer position and machine voltage to allow for higher grid side reactive power capability but reduced active power, and Fig. 5 c) illustrates a PQ diagram in normal operation with a number of nominal cells available, N, for comparison. It is noted that Fig. 5 a) to c) are capability curves. Any operating point within the indicated range can be reached. The reference point both for calculation and measurements is typically 271 (between 310 and 311), but other reference points could be used too (e.g., 212). For instance, the active and reactive power of any one of figures from Fig . 5 a) - c) may be computed based thereon.

In an N-m operation, the converter voltage supported by the healthy (N-m) cells may not be sufficient to cover the original operating diagram, as the remaining available converter voltage on the grid side may not allow for the same level of over-excited operation as before the fault (malfunctioning of at least one cell in at least one of the plurality of phase-legs). Using a different transformer tap can shift the secondary transformer voltage such that the converter has again sufficient voltage capability. However, as the voltage has been lowered, the current would need to be increased to provide the same power as before. Therefore, the power may now be current limited. A similar approach may be taken on the machine side by a reduction of the machine flux, in particular at partial load in which case the machine current may not be too high. So, the choice of the transformer tap position and machine flux will shift the UPQ operation diagrams as illustrated in Fig. 5 a) & b). The choice may be made based on the system constraints. For instance, when the maximum power is reduced due to low water head, the reactive power may be prioritized to have the full available potential both for active and reactive power and to improve the robustness of the operation. In another example, if the water head allows for maximum system power and no reactive power is requested in a given point in time, the setting with highest possible active power may be chosen. In yet another example, if both reactive power and active power reference are low, a new setting may be chosen based on loss optimization for the system. It is evident from the comparison of Fig. 5 a) & b) to Fig. 5 c) that in an N-m operation the active power and/or reactive power are reduced in comparison to the normal operation when the power system is controlled based on the method according to any one of the embodiments described herein.

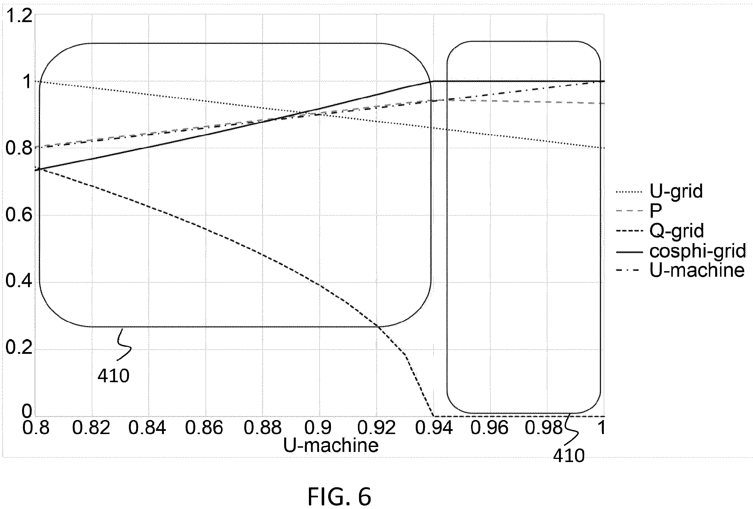

Fig. 6 illustrates a performance of a power system operating based on the method according to an embodiment of the present disclosure. In particular, the power system comprises a transformer, a converter, and a synchronous machine, wherein the converter comprises a plurality of cells and performs with reduced internal voltage capability, for instance due to at least one malfunctioning and/or lost cell in at least one of the plurality of phase-legs. The power system is controlled based on the method according to any one of the embodiments described herein and yields the data illustrated in Fig. 6. Y-axis of Fig. 6 is a ratio of a parameter to a maximum of the same parameter.

It is evident from Fig. 6 that both grid voltage and machine voltage have to be reduced in order to reach the maximum (active) power point, the reactive power capability is zero in the maximum active power point, the machine voltage would need to be reduced in order to allow for reactive power on the grid side, i.e., comprising the active power, and a further increase of machine voltage from the machine voltage at which the maximum power is reached would not bring any benefit regarding active power capability but require a further reduced grid side voltage, e.g., by utilizing the tap changer. It is noted that in normal operation with N healthy cells, the above restrictions may not apply. Full grid side and machine side voltage may be available at the same time, allowing both for the required active power and reactive power.

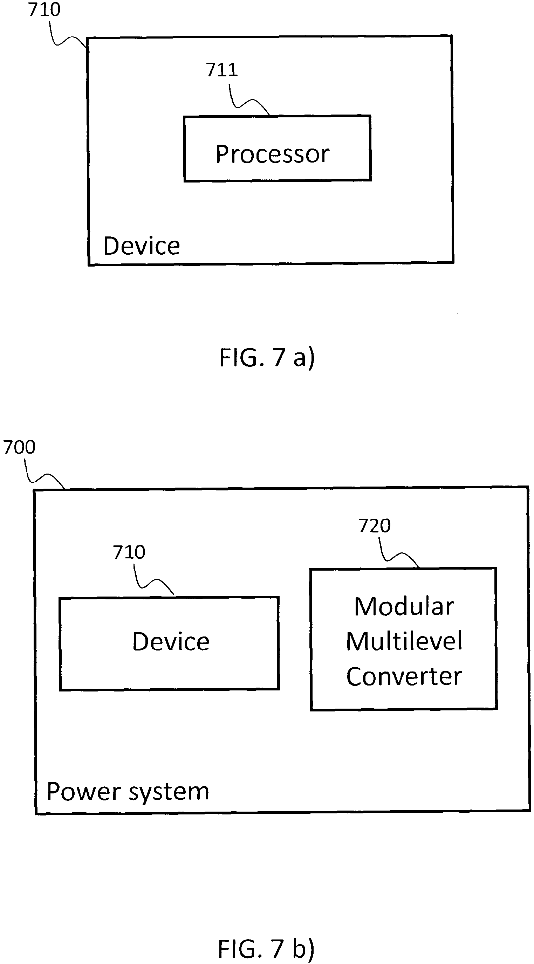

Fig. 7 a) illustrates a device according to an embodiment of the present disclosure and Fig. 7 b) illustrates a power system according to an embodiment of the present disclosure. In particular, the device 710 is a device for controlling a power system comprising a modular multilevel converter, MMC 720, having a first terminal electrically coupled to a first AC power source and a second terminal electrically coupled to a second AC power source, the device comprising a processor being configured to: obtain at least one power system parameter; adjust the MMC 720, in particular a maximum voltage capability of the MMC 720, the first AC power source, and/or the second AC power source based on the at least one power system parameter, wherein the MMC 720 comprises a plurality of phase-legs, and wherein each of the plurality of phase-legs comprises a plurality of cells; and control the power system based on the adjusted MMC 720, the first AC power source and/or the second AC power source. In an embodiment, the control block of Fig. 4 is implemented in the processor as instructions to be carried out. In an embodiment, the device 710 is configured to perform any one of the embodiments described herein. In an embodiment, an algorithm for controlling the power system may be separate from the algorithm for the optimization and/or performed independently. Fig. 7 b) illustrates a power system. In particular, the power system 700 comprises the device according to any one of the above-described embodiments and a modular multilevel converter, MMC 720, having a first terminal electrically coupled to a first AC power source and a second terminal electrically coupled to a second AC power source.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for controlling a power system comprising a modular multilevel converter, MMC, having a first terminal electrically coupled to a first AC power source and a second terminal electrically coupled to a second AC power source, the method comprising:

   obtaining at least one power system parameter;
   adjusting the MMC, in particular a maximum voltage capability of the MMC, the first AC power source, and/or the second AC power source based on the at least one power system parameter, wherein the MMC comprises a plurality of phase-legs, and wherein each of the plurality of phase-legs comprises a plurality of cells; and
   controlling the power system based on the adjusted MMC, the first AC power source and/or the second AC power source.

2. The method of claim 1, wherein the first AC power source and/or the second AC power source comprises or is a transformer, in particular comprising a tap-changer, or an excitation system comprising an excitable machine, in particular a synchronous machine.

3. The method of claim 2, wherein the transformer is electrically coupled to a grid or a load at a third terminal different from the first terminal and/or the second terminal, wherein the excitation system is electrically coupled to the grid or the load via a fourth terminal different from the first terminal, second terminal, and/or the third terminal, and wherein the excitable machine is mechanically coupled to a mechanical device, in particular to a reversible pump or turbine.

4. The method of any one of claims 1 to 3, wherein at least one cell in at least one of the plurality of phase-legs malfunctions.

5. The method of any one of claims 1 to 4, wherein the adjusting the MMC is or comprises:

adjusting a cell voltage setpoint of at least one cell in the at least one of the plurality of phase-legs;
allocating a cell voltage ripple of at least one cell in the at least one of the plurality of phase-legs, and/ or a control margin; and/or
setting a portion of the maximum voltage capability required by the first AC power source and a remaining portion of the maximum voltage capability to the second AC power source based on cell voltage setpoint and/or the status of the MMC, in particular a number of available cells.

6. The method of any one of claims 1 to 5, further comprising:

determining, in particular by solving an optimization problem, at least one property of the power system, wherein the at least one property of the power system is or comprises a maximally achievable active power throughput of the MMC, power losses of the MMC, harmonics, a ratio of a minimum reactive power to an active power of the MMC, or a reactive power capability of the first AC power source or the second AC power source; and controlling the power system based on the at least one property of the power system.

7. The method of any one of claims 1 to 6, wherein the at least one power system parameter is or comprises a water head, maximum expected active power of the MMC, a control input received from an external, in particular a superordinated, controller, a maximum expected reactive power of the first AC power source or a maximum expected reactive power of the second AC power source.

8. The method of any one of claims 1 to 7, wherein the at least one power system parameter is or comprises a number of available cells, in particular an absolute value or a relative value to a total number of nominal cells, a minimum number of cells for providing a power required by the first AC power source or the second AC power source, and a grid voltage.

9. The method of any one of claims 2 to 8, wherein the adjusting the first AC power source and/or the second AC power source is or comprises adjusting at least one of a tap-position of the tap-changer, a rotational speed of a rotational component of the excitable machine, a machine voltage of the excitable machine, a reactive power of the excitable machine, or a reactive power of the grid.

10. The method of any one of claims 1 to 9, wherein the MMC, in particular a maximum voltage capability of the MMC is adjusted based on the at least one power system parameter and subsequently the first AC power source and/or the second AC power source are adjusted based on the at least one power system parameter.

11. The method of any one of claims 1 to 10, further comprising:

obtaining voltage and/or current measurements of the first AC power source at the first terminal and/or the second AC power source at the second terminal;
adjusting the MMC, in particular a maximum voltage capability of the MMC, the first AC power source, and/or the second AC power source based further on the obtained voltage and/or current measurements; and
controlling the power system based on the adjusted MMC, the first AC power source and/or the second AC power source.

12. A device for controlling a power system comprising a modular multilevel converter, MMC, having a first terminal electrically coupled to a first AC power source and a second terminal electrically coupled to a second AC power source, the device comprising a processor being configured to:

obtain at least one power system parameter;
adjust the MMC, in particular a maximum voltage capability of the MMC, the first AC power source, and/or the second AC power source based on the at least one power system parameter, wherein the MMC comprises a plurality of phase-legs, and wherein each of the plurality of phase-legs comprises a plurality of cells; and
control the power system based on the adjusted MMC, the first AC power source and/or the second AC power source.

13. The device of claim 12, wherein the processor is further configured to perform the method according to any one of claims 2 to 11.

**14.** A power system comprising the device according to claim 12 or 13 and a modular multilevel converter, MMC, having a first terminal electrically coupled to a first AC power source and a second terminal electrically coupled to a second AC power source.

**15.** The power system of claim 14, further comprising an excitation system comprising an excitable machine, in particular a synchronous machine.

Obtaining at least one power system parameter

S101

Adjusting the MMC, in particular a maximum voltage capability of the MMC, the first AC power source, and/or the second power source based on the at least one power system parameter, wherein the MMC comprises a plurality of phase-legs, and wherein each of the plurality of phase-legs comprises a plurality of cells

S102

Controlling the power system based on the adjusted MMC, the first AC power source and/or the second power source

S103

FIG. 1

FIG. 2

FIG. 3

$P_{G,min}, P_{G.max}$      mode

$min(N)$ →

$U_{G,abs}$ →

$P_G, Q_G$ →

$F_M$ →

$Q_M$ →

→ $V_{DC}$

→ $k_{DC,ARU}, k_{DC,INU}$

→ Tap position

→ Machine flux

→ $k_P, k_{Q,ARU}, k_{Q,INU}$

410

FIG. 4

FIG. 5 b)

FIG. 5 a)

FIG. 5 c)

EP 4 395 146 A1

FIG. 6

710

711

Processor

Device

FIG. 7 a)

700

710

720

Device

Modular
Multilevel
Converter

Power system

FIG. 7 b)

Europäisches
Patentamt
European
Patent Office
Office européen
des brevets

# EUROPEAN SEARCH REPORT

Application Number

EP 22 38 6100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BONTEMPS PHILIPPE ET AL: "Performance Analysis of Energy Balancing Methods for Matrix Modular Multilevel Converters", IEEE TRANSACTIONS ON POWER ELECTRONICS, INSTITUTE OF ELECTRICAL AND ELECTRONICS ENGINEERS, USA, vol. 38, no. 3, 19 October 2022 (2022-10-19), pages 2910-2924, XP011931306, ISSN: 0885-8993, DOI: 10.1109/TPEL.2022.3215734 [retrieved on 2022-12-26] | 1-7,9-15 | INV.<br>H02M1/12<br>H02M7/483<br>H02M1/00<br>H02M5/297<br>H02M5/458<br>H02M1/32<br><br>ADD.<br>H02M5/12 |
| Y | * abstract *<br>* Section I. Introduction;<br>figures 1-4 * | 4,8 | |
| X | KUCKA JAKUB ET AL: "Optimised operating range of modular multilevel converters for AC/AC conversion with failed modules", 2015 17TH EUROPEAN CONFERENCE ON POWER ELECTRONICS AND APPLICATIONS (EPE'15 ECCE-EUROPE), JOINTLY OWNED BY EPE ASSOCIATION AND IEEE PELS, 8 September 2015 (2015-09-08), pages 1-10, XP032800453, DOI: 10.1109/EPE.2015.7309453 [retrieved on 2015-10-27] | 1-7, 12-15 | TECHNICAL FIELDS SEARCHED (IPC)<br><br>H02M |
| Y | * abstract * | 4,8 | |
| A | * Section Introduction;<br>figures 1-4 * | 9-11 | |

The present search report has been drawn up for all claims

| Place of search | Date of completion of the search | Examiner |
|---|---|---|
| The Hague | 24 May 2023 | Van der Meer, Paul |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)